# EUROPÄISCHE PATENTSCHRIFT

(11) **EP 1 368 208 B1**
(45) Veröffentlichungstag und Bekanntmachung des Hinweises auf die Patenterteilung: **12.04.2006**
(21) Anmeldenummer: 01971772.7
(22) Anmeldetag: 21.07.2001
(51) Int. Cl.: B60K 11/08, B60R 21/34

(54) **KRAFTWAGENBUG MIT EINER STOSSFÄNGEREINHEIT**
MOTOR VEHICLE FRONT END COMPRISING A BUMPER UNIT
PARTIE AVANT DE VEHICULE COMPORTANT UNE UNITE D'ABSORPTION DES CHOCS

(30) Priorität: 15.03.2001 DE 10112424
(43) Veröffentlichungstag der Anmeldung: 10.12.2003
(73) Patentinhaber: DaimlerChrysler AG, 70567 Stuttgart (DE)
(72) Erfinder: BAUER, Ralph, 71263 Weil der Stadt (DE); BROWN, Gary, Nuneaton CV10 9TF (GB); FRANK, Thomas, 70619 Stuttgart (DE); RATHJE, Klaus, 71157 Hildrizhausen (DE)
(86) Internationale Anmeldenummer: PCT/EP2001/008454
(87) Internationale Veröffentlichungsnummer: WO 2002/074570

(56) Entgegenhaltungen:
- DE-A- 3 003 568
- DE-C- 3 825 071
- GB-A- 2 343 740

## Beschreibung

Die Erfindung betrifft einen Kraftwagenbug mit einer Stoßfängereinheit gemäß dem Oberbegriff des Patentanspruchs 1.

Aus der DE 38 25 071 C1 ist bereits ein Kraftwagenbug mit einer an eine Bodentragstruktur des Kraftwagens angeschlossen Stoßfängereinheit bekannt, bei der in eine Stoßfängerverkleidung Kühlluftöffnungen eingebracht sind, um die hinter der Stoßfängereinheit angeordneten Antriebsaggregate mit Kühlluft zu versorgen. Die Kühlluftöffnungen sind ober- und unterhalb eines zur Stoßfängereinheit gehörenden Querträgers angeordnet, in den ein prallelastischer Stoßfänger integriert ist.

Um die durch die Kühlluftöffnungen einströmende Luft mit möglichst wenig Strömungsverlusten an die Antriebsaggregate weiterzuleiten, ist zwischen der Stoßfängerverkleidung und der Bodentragstruktur ein Luftführungsteil angeordnet, welches einen Luftleitkanal bildet.

Mit derartigen oder ähnlichen zusätzlichen Baugruppen zur Verbesserung der Leistungsfähigkeit der Antriebsaggregate im Bugbereich eines Kraftwagens wird die Packungsdichte zunehmend erhöht, so dass wenig konstruktiver Freiraum bei der Gestaltung von Maßnahmen zur Verbesserung des Fußgängerschutzes bei Kollisionen besteht.

Der Erfindung liegt daher die Aufgabe zugrunde, einen Kraftwagenbug der gattungsgemäßen Art dahingehend weiterzuentwickeln, dass unter Beibehaltung der vorteilhaften Wirkung des Luftführungsteils der Schutz von Fußgängern bei einer Kollision verbessert wird.

Die Aufgabe wird erfindungsgemäß durch die Merkmale des Patentanspruchs 1 gelöst.

Vorteilhafte Ausgestaltungen der Erfindung sind den übrigen Ansprüchen zu entnehmen.

Durch eine Versteifung der Stoßfängerverkleidung mit einem bereits vorhandenen Bauteil, wie dem Luftführungsteil, wird der zur Verfügung stehende Bauraum im Kraftwagenbug zur Verbesserung des Fußgängeraufprallschutzes optimal ausgenutzt. Dabei wirkt das Luftführungsteil in einem dem Stoßfänger vorverlagerten Bereich versteifend auf die Stoßfängerverkleidung, so dass ein Fußgänger bei einer Kollision zuerst mit diesem -etwa in Unterschenkelhöhe des Fußgängers verlaufenden- Bereich in Kontakt tritt. Durch den im unteren Beinbereich wirkenden Bewegungsimpuls vom Kraftwagenbug weg, wird der Fußgänger um seinen Körperschwerpunkt ausgelenkt, so dass sich dessen Oberkörper in Richtung der Motorhaube bewegt. Dabei wird der nachgiebig ausgebildete Stoßfänger eingedrückt, so dass ein definiertes Abrollen des Fußgängers über die Motorhaube erfolgt. Gleichzeitig wirkt die Versteifung der Stoßfängerverkleidung als Unterfahrschutz für Fußgänger, so dass dieser bei einer Kollision nicht unter das Fahrzeug gezogen werden kann. Das Luftführungsteil ist dabei so eingestellt, dass unter Einhaltung der Beschleunigungswerte und der erforderlichen Eindringwege für den Fußgänger die erforderliche Abstützkraft schnell erreicht und gehalten wird.

Mit der Erstreckung des Luftführungsteils über nahezu die gesamte Kraftwagenbreite wird die Stoßfängerverkleidung auch in den seitlichen Bereichen des Kraftwagenbugs versteift und gleichzeitig die im Bugraum zur Verfügung stehende Querschnittsfläche für die Kühlluftzuführung optimal ausgenutzt.

In einer bevorzugten Ausführungsform erfolgt die Abstützung des Luftführungsteils am vorderen Ende von zwei zur Bodentragstruktur gehörenden Längsträgerabschnitten. Das Luftführungsteil ist als ein Spritzgussteil ausgebildet, wobei der verwendete Kunststoff verhältnismäßig steif, schlagzäh und nicht zu spröde sein sollte. Die Anbindung an die vorderen Enden der Längsträgerabschnitte ermöglicht eine stabile Abstützung an schon vorhandenen Bauteilen, die ohne viel zusätzlichen Änderungsaufwand in das Spritzgussteil integriert werden kann.

Ein auf die vorderen Enden der Längsträgerabschnitte gestülptes Auffahrschutzelement wirkt zusätzlich zu seiner Funktion als Abstützung des Luftführungsteils als Auffahrschutz bei Bagatellschäden. So können zum Beispiel beim Auffahren auf Bordsteine oder dergleichen die zur Tragstruktur gehörenden Längsträgerabschnitte durch das Auffahrschutzelement optimal gegen Beschädigung geschützt werden. Das Auffahrschutzelement ist vorzugsweise aus Kunststoff hergestellt, so dass eine Anpassung an nahezu jede Formgebung der Verbindung zwischen der Tragstruktur und des Luftführungsteils hergestellt werden kann.

Um die Herstellungskosten weiter zu reduzieren, kann das Luftführungsteil einstückig mit dem Auffahrschutzelement ausgebildet sein.

Durch die Erstreckung des Luftführungsteils seitlich über die Abstützungspunkte an den vorderen Enden der Längsträgerabschnitte hinaus ist der. Fußgängerschutz auch bei einer Offsetkollision mit einem Fußgänger gegeben.

Um eine gleichmäßige Abstützung des Luftführungsteils an der Stoßfängerverkleidung zu erreichen, ist die der Stoßfängerverkleidung zugewandte Kontur des Luftführungsteils der Innenkontur der Stoßfängerverkleidung angepasst. Zudem kann durch das Luftführungsteil die Stoßfängerverkleidung vorgespannt werden, um die Formstabilität der Stoßfängerverkleidung zu verbessern.

In einer besonders bevorzugten Ausführungsform weist das Luftführungsteil eine flügelähnliche Form auf. Um das Luftführungsteil in sich stabil auszuführen, sind auf der Flügeloberseite eine Anzahl von in Fahrzeuglängsrichtung ausgerichteten Versteifungsrippen angeordnet, die in Fahrzeugquerrichtung voneinander beabstandet sind.

Besonders versteifend im unteren Bereich der Stoßfängerverkleidung wirken Versteifungsrippen, die sich von der Flügelunterseite aus in Richtung Stoßfängerverkleidung erstrecken. Durch die Angleichung der Abschlusskante jeder Versteifungsrippe an die Innenkontur der Stoßfängerverkleidung wird die Steifigkeit in diesem Bereich besonders erhöht, so dass im Crashfall der Unterschenkel eines Fußgängers abprallen kann.

Mit der Bildung eines zumindest teilweise geschlossenen Hohlprofils durch die Stoßfängerverkleidung und das Luftführungsteil wird eine weitere Versteifung zum Fußgängeraufprallschutz mit einfachen Mitteln erreicht. Dabei kann der Flügel mit seinen Abschlusskanten an der Stoßfängerverkleidung befestigt sein oder aber auch nur anliegen.

Zusätzlich zur beidseitigen Abstützung des Luftführungsteils an den vorderen Enden der Längsträgerabschnitte kann eine Abstützung an einem die vorderen Längsträgerabschnitte verbindenden Querträger erfolgen. Dadurch wird die Steifigkeit der Stoßfängerverkleidung im unteren Bereich weiter verbessert.

Weitere vorteilhafte Ausgestaltungen der Erfindung werden im folgenden anhand der Zeichnung erläutert. Dabei zeigen:
- Fig. 1: eine Längsschnittdarstellung in Höhe eines rechten Längsträgers eines Kraftwagenbugs,
- Fig. 2: eine-Längsschnittdarstellung in Höhe der Fahrzeugmitte des Kraftwagenbugs,
- Fig. 3: eine Draufsicht auf das in den Fig. 1 und 2 dargestellte Luftführungsteil,
- Fig. 4: eine Längsschnittdarstellung in Höhe der Fahrzeugmitte eines Kraftwagenbugs in einer zweiten Ausführungsform,
- Fig. 5: eine perspektivische Schrägansicht eines Luftführungsteils in einer dritten Ausführungsform sowie
- Fig. 6: eine perspektivische Darstellung der Anordnung des Luftführungsteils gemäß Fig. 5 in der Stoßfängereinheit in einer perspektivischen Schrägansicht von hinten.

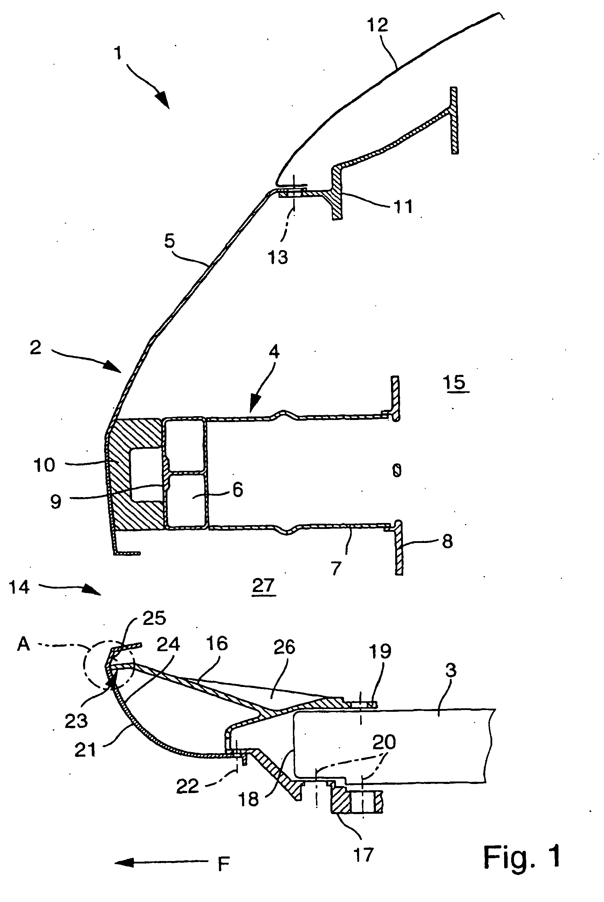

In Fig. 1 ist ein Kraftwagenbug 1 mit einer Stoßfängereinheit 2 in einem Längsschnitt dargestellt, der in Höhe eines vorderen Längsträgerabschnitts 3 verläuft, wobei der Längsträgerabschnitt 3 zu einer nicht weiter dargestellten Bodentragstruktur eines Kraftwagens gehört.

Die Stoßfängereinheit 2 umfasst einen vorderen Stoßfänger 4 und eine Stoßfängerverkleidung 5.

Der vordere Stoßfänger 4 wird durch einen Querträger 6 gebildet, der über einen Pralltopf 7 an ein Tragbauteil 8 des Kraftwagens angeschlossen ist. An der vorderen Stirnseite 9 des als Zweikammerhohlprofil ausgebildeten Querträgers 6 ist ein Prallschaumteil 10 befestigt, das sich über nahezu die gesamte Kraftwagenbreite erstreckt. Das Prallschaumteil 10 weist einen u-förmigen Querschnitt auf.

Der Kraftwagenbug 1 wird nach vorn durch die Stoßfängerverkleidung 5 abgeschlossen, die im oberen Bereich mit einem Karosserierahmenteil 11 und einem Seitenteil 12 mittels Schraubverbindung 13 verbunden ist.
Unterhalb des vorderen Stoßfängers 4 ist eine sich zumindest teilweise über die Kraftwagenbreite erstreckende Kühlluftöffnung 14 in die Stoßfängerverkleidung 5 eingebracht, um die im Motorraum 15 angeordneten Antriebsaggregate mit ausreichend Kühlluft zu versorgen. Die Kühlluftöffnung 14 ist in diesem Ausführungsbeispiel für die Kühlluftzufuhr eines Ladeluftkühlers ausgelegt, der in Fig. 1 allerdings nicht dargestellt ist.

Unterhalb der Kühlluftöffnung 14 ist ein Luftführungsteil 16 angeordnet, das über ein Auffahrschutzelement 17 an das vordere Ende 18 des Längsträgerabschnitts 3 befestigt ist. Dazu ist das Auffahrschutzelement 17 mit dem Luftführungsteil 16 als einstückiges Kunststoffteil ausgebildet, wobei das Auffahrschutzelement 17 in ihrem hinteren Bereich 19 mittels Schraubverbindung 20 am Längsträgerabschnitt 3 festgelegt ist. Das Auffahrschutzelement 17 ist so geformt, dass seine Innenkontur im wesentlichen der Außenkontur des vorderen Endes 18 des Längsträgerabschnitts angepasst ist, so dass das Auffahrschutzelement 17 einfach über das vordere Ende 18 gestülpt werden kann.
Gleichzeitig ist die sich unterhalb der Kühlluftöffnung 14 erstreckende Unterlippe 21 der Stoßfängerverkleidung 5 über eine Schraubverbindung 22 an dem Auffahrschutzelement 17 und damit am vorderen Längsträgerabschnitt 3 befestigt.

Das Luftführungsteil 16 erstreckt sich flügelförmig über nahezu die gesamte Kraftwagenbreite, unabhängig davon, ob eine Kühlluftöffnung 14 oberhalb angeordnet ist oder nicht. Mit seiner der Stoßfängerverkleidung 5 zugewandten Abschlusskante 23 liegt das sich zungenförmig in Fahrzeuglängsrichtung erstreckende Luftführungsteil 16 an der Innenkontur 24 der Stoßfängerverkleidung 5 an, wobei für die schwingungsarme Lagerung des Luftführungsteils 16 die Innenkontur 24 im Anlagebereich der Abschlusskante 23 als Eingriffswinkel 25 ausgeformt ist. Zur Versteifung des Luftführungsteils 16 sind an dessen Oberseite in Fahrzeuglängsrichtung ausgerichtete Versteifungsrippen 26 angeordnet. Je nach gewünschter Steifigkeit kann die Anzahl der Versteifungsrippen 26 in Fahrzeugquerrichtung erhöht werden, wobei sich die Abstände zwischen den Versteifungsrippen 26 entsprechend verringern.

Durch die Abdeckung der Unterlippe 21 mit dem Luftführungsteil 16 entsteht ein zumindest nach unten geschlossener Luftleitkanal 27, durch den die einströmende Luft gezielt zum Ladeluftkühler geleitet wird. Durch die zungenförmige Ausgestaltung des Luftführungsteils kann eine optimale Nutzung der eingeströmten Luft gewährleistet werden, ohne dass unerwünschte Strömungsverluste auftreten. Gleichzeitig erfolgt eine Anpassung an die baulichen Gegebenheiten im Bugraum, wobei der durch die Kühlluftöffnung 14 eintretende Luftstrom gezielter auf das zu kühlende Antriebsaggregat ausgerichtet werden kann.

Das Luftführungsteil 16 wirkt bei einer Fußgängerkollision versteifend auf die zur Stoßfängerverkleidung 5 gehörende und dem Stoßfänger 4 leicht vorverlagerte Unterlippe 21. Die Unterlippe 21 ist demnach das am weitesten nach vorn überstehende Bauteil im Kraftwagenbug 1. Das hat zur Folge, dass bei einer Kollision mit einem Fußgänger zunächst dessen Unterschenkel von der Unterlippe 21 durch den mit einem Kreis markierten Bereich A erfasst wird. Durch die Versteifung der Unterlippe 21 mit dem Luftführungsteil 16 in genau diesem Bereich A werden die Beine des Fußgängers in Fahrtrichtung. F vom Fahrzeug wegbewegt, so dass der Fußgänger um seinen Schwerpunkt ausgelenkt wird. Beim Auftreffen auf das Prallschaumteil 10 werden durch das Eindrücken des Prallschaums Aufprallkräfte absorbiert, während sich der Fußgänger über die Motorhaube definiert abrollt. Ein Überfahren des kollidierten Fußgängers wird damit nahezu ausgeschlossen. Die Motorhaube kann dazu mit weiteren Maßnahmen zum Fußgängerschutz, wie beispielsweise ein Airbag im Bereich der oberen Motorhaubenkante, ausgerüstet sein. In weiteren Ausführungsformen kann die Unterlippe 21 bündig mit der Kontur der Stoßfängerverkleidung oder geringfügig zurückverlagert ausgebildet sein.

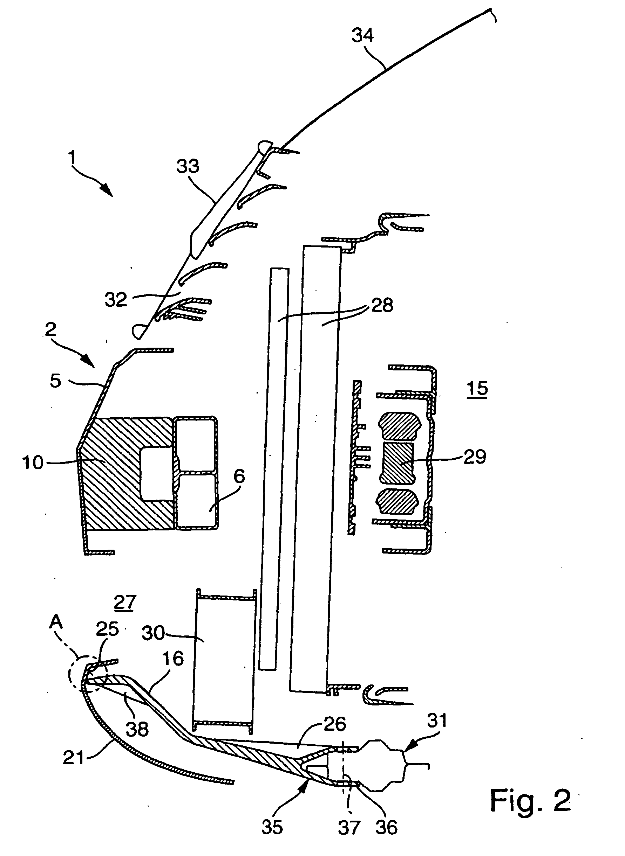

In Fig. 2 ist ein Längsschnitt durch die Fahrzeugmitte des Kraftwagenbugs 1 dargestellt, wobei gleiche Bezugsziffern gleiche Bauteile kennzeichnen.

Aus Fig. 2 sind nunmehr auch die zu kühlenden Aggregate ersichtlich, wobei mit 28 ein Wasserkühler, mit 29 ein Lüfter und mit 30 der bereits in Fig. 1 erwähnte Ladeluftkühler beziffert sind. Im Unterschied zu Fig. 1 ist hier ein Querträger 31 der Bodentragstruktur zu sehen, der die vorderen hier nicht dargestellten Längsträgerabschnitte 3 miteinander verbindet.

Oberhalb des mit dem Prallschaumteil 10 verbundenen Querträgers 6 ist eine weitere Kühlluftöffnung 32 in der Stoßfängerverkleidung 5 vorgesehen, die mit einem Kühlergitter 33 abgedeckt ist. Die durch das Kühlergitter 33 einströmende Luft wird dem dahinter liegenden Wasserkühler 28 zugeführt. Oberhalb des Kühlergitters 33 schließt sich eine Motorhaube 34 an.

In der Fahrzeugmitte des Kraftwagens ist das Luftführungsteil 16 zungenförmig ausgebildet und leitet somit die durch die Kühlluftöffnung 14 einströmende Luft direkt zum Ladeluftkühler 30. Der zungenförmige Querschnitt unterstützt ein Absacken der Luft in Richtung des Ladeluftkühlers 30, ohne dass unnötige Leckverluste durch Verwirbelungen entstehen.

Um eine Abstützung in der Fahrzeugmitte an der Bodentragstruktur zu erreichen, ist das Luftführungsteil 16 mit dem Querträger 31 verbunden. Dazu ist das dem Querträger 31 zugewandte Ende 35 gabelförmig ausgebildet. Das als Gabel 36 angeformte Ende 35 ist teilweise über den Querträger 31 gestülpt und mittels Schraubverbindung 37 daran befestigt.

Von der Gabel 36 aus erstreckt sich das Luftführungsteil 16 wiederum bis zur Innenkontur 25 der zur Stoßfängerverkleidung 5 gehörenden Unterlippe 21 und wirkt bei einer Fußgängerkollision im Bereich A versteifend auf die Stoßfängerverkleidung 5. Das Luftführungsteil 16 weist analog zu Fig. 1 an seiner Oberseite Versteifungsrippen 26 auf. Zur Verbesserung der Steifigkeit sind zusätzlich an der Unterseite des Luftführungsteils 16 Versteifungsrippen 38 vorgesehen.

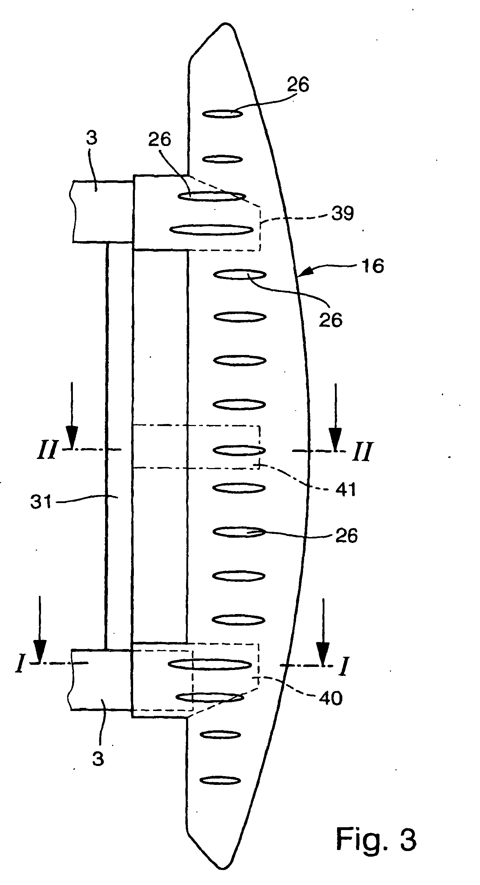

In Fig. 3 ist eine schematische Draufsicht von oben auf das Luftführungsteil 16 dargestellt, wobei sich das Luftführungsteil 16 über nahezu die gesamte Fahrzeugbreite und über die in Fig. 1 beschriebenen Abstützungen 39 und 40 am vorderen Längsträgerabschnitt 3 hinaus flügelförmig erstreckt.

Die in den Fig. 1 und 2 bereits beschriebenen Längsschnittdarstellungen sind mit den Linien I-I für Fig. 1 und II-II für Fig. 2 eingezeichnet.

Wie aus Fig. 3 hervorgeht, sind die Versteifungsrippen 26 über die gesamte Erstreckung des Luftführungsteils 16 in Fahrzeugquerrichtung verteilt angeordnet.

Optional ist zwischen den an den Längsträgerabschnitten 3 vorgesehenen Abstützungen 39 und 40 eine zusätzliche, strichpunktiert dargestellte Abstützung 41 am Querträger 31 angeordnet, die mit einem Ausführungsbeispiel in Fig. 3 bereits beschrieben wurde. Selbstverständlich können noch mehrere zusätzliche Abstützungen 41 vorgesehen sein, um eventuell auftretende Eigenschwingungen des Luftführungsteils 16 zu verhindern.

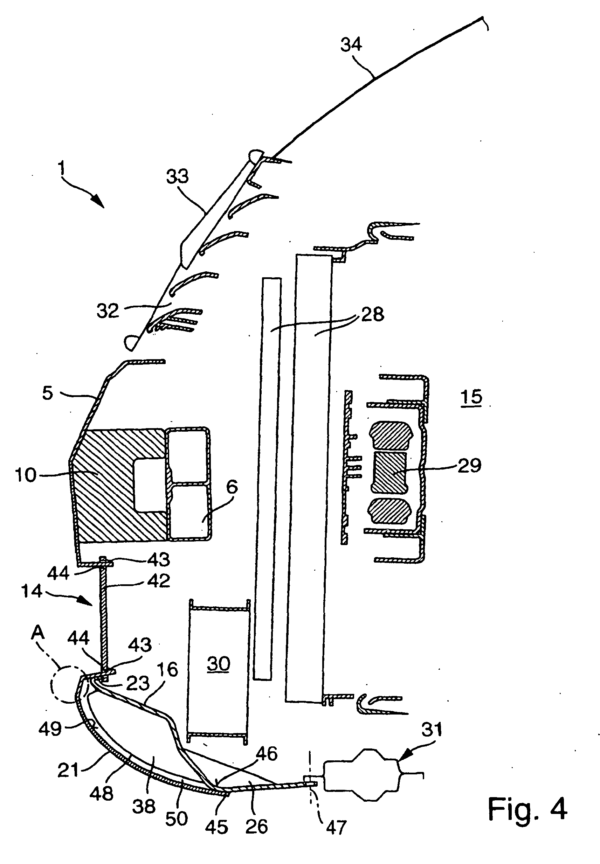

Ein weiteres Ausführungsbeispiel für die Abstützung 41 am Querträger 31 ist in Fig. 4 gemäß der Linie 11-11 aus Fig. 3 dargestellt.

Der Kraftwagenbug 1 ist analog zu dem in Fig. 2 dargestellten Ausführungsbeispiel aufgebaut und unterscheidet sich lediglich in der Form des Luftführungsteils 16.

Das Luftführungsteil 16 erstreckt sich nunmehr von der Kühlluftöffnung 14 über die Unterlippe 21 bis zum Querträger 31 der Bodentragstruktur. Im Bereich der Kühlluftöffnung 14 ist das Luftführungsteil 16 als Kühlluftgitter 42 ausgebildet und mittels Rastnasen 43 an Öffnungskanten 44 der Kühlluftöffnung 14 befestigt. Unterhalb der Kühlluftöffnung 14 ist das Luftführungsteil 16 stufenförmig ausgebildet, um die durch die Kühlluftöffnung 14 einströmende Luft gezielt zum Ladeluftkühler 30 zu leiten. Im Gegensatz zum ersten Ausführungsbeispiel in Fig. 2 ist die Abschlusskante 23 mit der unteren Öffnungskante 44 der Kühlluftöffnung 14 verschweißt. Alternativ kann auch eine andere Befestigung, wie beispielsweise eine Verklipsung, vorgesehen sein. Am unteren Abschluss 45 der Unterlippe 21 liegt das Luftführungsteil 16 mit einem Teilbereich 46 auf und ist dort ebenfalls mittels Verschweißung oder Verklipsung festgelegt.

Die Abstützung 41 am Querträger 31 erfolgt über eine Schraubverbindung 47. Alternativ kann das Luftführungsteil 16 im Bereich der Abstützung am Querträger 31 ähnlich der Gabel 36. in Fig. 2 ausgebildet sein.

Wie im Ausführungsbeispiel in Fig. 2 weist das Luftführungsteil 16 sowohl an seiner Oberseite als auch an seiner Unterseite Versteifungsrippen 26 und 38 auf. Im Gegensatz zu Fig. 2 sind die Versteifungsrippen 26 und 38 jedoch wesentlich großflächiger ausgelegt, um den die Unterlippe 21 im unteren Bereich der Stoßfängerverkleidung 5 weiter zu versteifen. Insbesondere ist die Kontur 48 der Versteifungsrippe 38 an die Innenkontur 49 der Unterlippe 21 angeglichen, so dass der durch die Unterlippe 21 und das Luftführungsteil 16 gebildete Hohlraum 50 nahezu vollständig durch die Versteifungsrippe 38 geschlossen wird. Bei einem Crash mit einem Fußgänger erfolgt ein starker Abpralleffekt durch die versteifte Unterlippe 21 auf den Unterschenkel des Fußgängers, der dadurch in seinem unterhalb des Körperschwerpunktes liegenden Bereich vom Fahrzeug abgewiesen und mit seinem oberen Bereich auf die Motorhaube zu bewegt wird. Gleichzeitig wird damit unterstützt, dass der Beinbereich des Fußgängers aus dem Gefahrenbereich der Vorderräder gebracht wird.

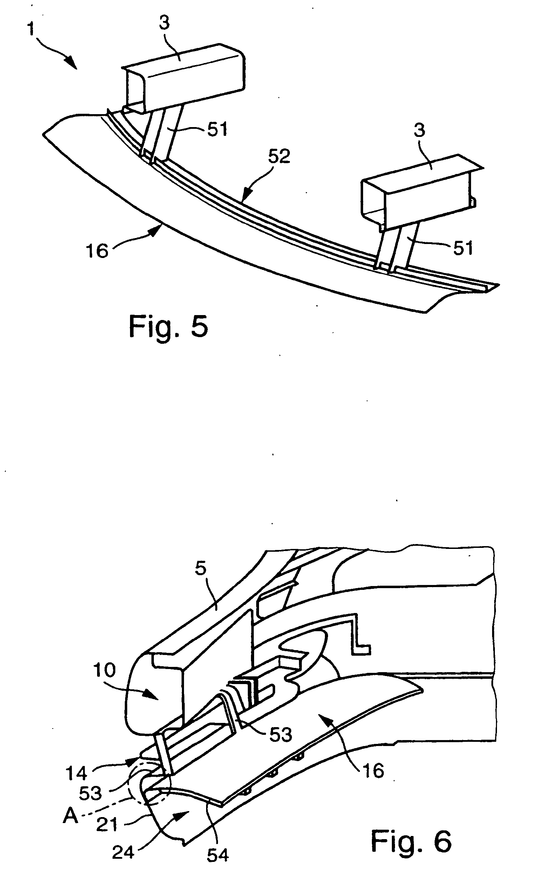

In Fig. 5 ist ein drittes Ausführungsbeispiel für ein Luftführungsteil 16 dargestellt, das für einen langgestreckten Kraftwagenbug 1 geeignet ist, dessen vordere Längsträgerabschnitte 3 oberhalb des für den Fußgängeraufprall kritischen Bereichs A angeordnet sind.

Um das Luftführungsteil 16 an den als geschlossenes Kastenprofil ausgebildete Längsträgerabschnitten 3 abzustützen, sind Streben 51 vorgesehen, die an der Unterseite eines jeden Längsträgerabschnitts 3, beispielsweise mit einer Schweißverbindung, befestigt werden: Die Streben 51 sind hier bezüglich der Fahrzeughochachse mit ihrem unteren Ende schräg nach vorn ausgerichtet, wobei jedoch die Orientierung der Streben 51 abhängig von der Anordnung des Stoßfängersystems bezüglich ihrer Lage zur Tragstruktur 3 ist.

Die unteren Enden der Streben 51 werden über die Fahrzeugbreite durch ein Trägerteil 52 miteinander verbunden, das eine höhere Steifigkeit als das beispielsweise aus Kunststoff bestehende Luftführungsteil 16 aufweist. Die höhere Steifigkeit des Trägerteils kann beispielsweise erreicht werden, indem das Trägerteil als geschlossenes Kastenprofil aus Blech ausgebildet ist. Bei entsprechender Gestaltung des Luftführungsteils 16 kann die bei einem Fußgängeraufprall wirkende Kraft durch das Luftführungsteil 16 ausreichend schnell aufgenommen und über das Trägerteil 52 und die Streben 51 an die Bodentragstruktur weitergeleitet werden. Das Luftführungsteil 16 ist dabei so eingestellt, dass unter Einhaltung der Beschleunigungswerte und der erforderlichen Eindringwege für den Fußgänger die erforderliche Abstützkraft schnell erreicht und gehalten wird.

Aus Fig. 6 ist die Positionierung des Luftführungsteils 16 bezüglich der Stoßfängerverkleidung 5 und des Prallschaumteils 10 ersichtlich. Die mit Stegen 53 teilweise abgedeckte Kühlluftöffnung 14 wird in ihrem unteren Bereich, analog zu den oben beschriebenen Ausführungsbeispielen gemäß den Fig. 1 bis 4, von der Unterlippe 21 der Stoßfängereinheit 2 begrenzt. Im Gegensatz zu herkömmlichen Stoßfängereinheiten liegt der vordere Abschluss des Prallschaumteils 10 mit dem kritischen Bereich A der Unterlippe 21 in einer nahezu vertikal verlaufenden Fahrzeugquerebene. Damit erhält der Unterschenkelbereich eines Fußgängerbeins beim Aufprall einen großflächigen Impuls entgegen der Fahrtrichtung, so dass der Oberkörper definiert in Richtung Motorhaube abrollen kann.

Die Ausbildung des Luftführungsteils ist hier beispielhaft mit Versteifungsrippen 54 dargestellt, die an der Unterseite des Luftführungsteils 16 über die Fahrzeugbreite angeordnet sind. Dadurch wird eine kontrollierte Steifigkeit über die gesamte Fahrzeugbreite erreicht, die verhindert, das der Unterschenkelbereich zu weit in die Unterlippe 21 eindringt bzw. hineinrotiert. Die Abstützung des Luftführungsteils 16 an der Innenkontur 24 der Unterlippe 21 kann durch entsprechende Verbindungstechniken, wie Schrauben, Kleben Nieten unterstützt werden, um eine wirkungsvolle Kraftabstützung zu erzielen.

Die Steifigkeit des Luftführungsteils 16 kann durch folgende Faktoren individuell auf die fahrzeug- und stoßfängerspezifisch erforderliche Kraft-Weg-Kerinung abgestimmt werden:
- Art des Materials, Materialdicke und Materialgeometrie;
- Position, Größe, Ausführungsform und Wanddicke der Versteifungsrippen;
- alternativer Einsatz von netz- oder wabenförmigen Verstärkungstrukturen;
- bevorzugt ist die Steifigkeit des Trägerteils 52 höher als die des Luftführungsteils 16 (alternativ kann das Trägerteil 52 so auf das Luftführungsteil 16 abgestimmt sein, dass eine gemeinsame Deformation von beiden Teilen möglich ist);
- Verbindungstechnik zwischen Unterlippe 21 und Luftführungsteil 16
- Position und Ausführung der Versteifungsrippen 54 über die Fahrzeugbreite.

Unabhängig von den genannten Faktoren zur Abstimmung der Kraft-Weg-Kennung ist das Luftführungsteils 16 so ausgebildet, dass über die gesamte Fahrzeugbreite annähernd ein gleiches Deformationsverhalten und damit eine gleiche Kinematik des Beinaufpralls gewährleistet werden kann.

## Patentansprüche

1. Kraftwagenbug mit einer Stoßfängereinheit, die ein unterhalb des Stoßfängers (4) angeordnetes Luftführungsteil (16), eine stoßfängerverkleidung (5) sowie einen vorderen Stoßfänger (4) umfasst, der durch die Stoßfängerverkleidung (5) außenseitig abgedeckt ist, und die in ihrem unteren Bereich an eine Bodentragstruktur des Kraftwagens anschließbar ist,
**dadurch gekennzeichnet,**
**dass** das Luftführungsteil (16) bei einem Frontalaufprall mit der Stoßfängerverkleidung (5) zusammenwirkt und diese in einem dem Stoßfänger (4) vorgelagerten Bereich versteift, wobei das Luftführungsteil an der Bodentragstruktur (3, 31) abstützbar ist.

2. Kraftwagenbug nach Anspruch 1,
**dadurch gekennzeichnet,**
**dass** sich das unterhalb einer in der Stoßfängerverkleidung (5) eingebrachten Kühlluftöffnung (14) angeordnete Luftführungsteil (16) über nahezu die gesamte Kraftwagenbreite erstreckt.

3. Kraftwagenbug nach Anspruch 1,
**dadurch gekennzeichnet,**
**dass** die Abstützung des Luftführungsteils (16) am vorderen Ende (18) von zwei zur Bodentragstruktur gehörenden Längsträgerabschnitten (3) erfolgt.

4. Kraftwagenbug nach Anspruch 2,
**dadurch gekennzeichnet,**
**dass** auf die vorderen Enden (18) der Längsträgerabschnitte (3) jeweils ein Auffahrschutzelement (17) gestülpt ist, das mit dem Luftführungsteil (16) verbunden ist.

5. Kraftwagenbug nach Anspruch 4,
**dadurch gekennzeichnet,**
**dass** das Luftführungsteil (16) einstückig mit dem Auffahrschutzelement (17) als Kunststoffteil ausgebildet ist.

6. Kraftwagenbug nach Anspruch 3,
**dadurch gekennzeichnet,**
**dass** sich das Luftführungsteil (16) seitlich über die Abstützungen (39, 40) an den Längsträgerabschnitten (3) hinaus erstreckt.

7. Kraftwagenbug nach Anspruch 1,
**dadurch gekennzeichnet,**
**dass** die der Stoßfängerverkleidung (5) zugewandte Kontur (23) des Luftführungsteils (16) der Innenkontur (24) der Stoßfängerverkleidung (5) angepasst ist, wobei die Kontur (23) des Luftführungsteils (16) an der Innenkontur (24) der Stoßfängerverkleidung (5) anliegt und verbunden ist.

8. Kraftwagenbug nach Anspruch 7,
**dadurch gekennzeichnet,**
**dass** das Luftführungsteil (16) einstückig mit der Stoßfängerverkleidung (5) ausgebildet ist.

9. Kraftwagenbug nach Anspruch 7,
**dadurch gekennzeichnet,**
**dass** das Luftführungsteil (16) eine flügelähnliche Form aufweist, wobei auf der Flügeloberseite eine Anzahl von in Fahrzeuglängsrichtung ausgerichteten, in Fahrzeugquerrichtung voneinander beabstandeten Versteifungsrippen (26) angeordnet sind.

10. Kraftwagenbug nach Anspruch 9;
**dadurch gekennzeichnet,**
**dass** auf der Flügelunterseite Versteifungsrippen (38) angeordnet sind, deren der Stoßfängerverkleidung (5) gegenüberliegende Kontur (48) an die Innenkontur (49) der Stoßfängerverkleidung (5) angeglichen ist.

11. Kraftwagenbug nach Anspruch 9,
**dadurch gekennzeichnet,**
**dass** der Flügel (16) zusammen mit dem davor gelagerten Bereich (21) der Stoßfängerverkleidung (5) ein geschlossenes Hohlprofil bildet.

12. Kraftwagenbug nach Anspruch 3,
**dadurch gekennzeichnet,**
**dass** zusätzlich zur beidseitigen Abstützung (39, 40) an den vorderen Enden (18) der Längsträgerabschnitte (3) eine Abstützung (41) an einem die vorderen Längsträgerabschnitte (3) verbindenden Querträger (31) erfolgt.

## Claims

1. Front part of a motor vehicle having a bumper unit which comprises an air guiding part (16) which is arranged underneath the bumper (4), a bumper covering (5) and a front bumper (4) which is covered on the outside by the bumper covering (5) and which can be connected in its lower region to a bottom supporting structure of the motor vehicle, **characterized in that**, in the event of a head-on impact, the air guiding part (16) interacts with the bumper covering (5) and stiffens it in a region which is positioned in front of the bumper (4), it being possible to support the air guiding part on the bottom supporting structure (3, 31).

2. Front part of a motor vehicle according to Claim 1, **characterized in that** the air guiding part (16) which is arranged underneath a cooling air opening (14) which is introduced into the bumper covering (5) extends over virtually the entire width of the motor vehicle.

3. Front part of a motor vehicle according to Claim 1, **characterized in that** the air guiding part (16) is supported at the front end (18) by two longitudinal carrier sections (3) which are associated with the bottom supporting structure.

4. Front part of a motor vehicle according to Claim 2, **characterized in that** a rear end collision protection element (17) which is connected to the air guiding part (16) is fitted over each of the front ends (18) of the longitudinal carrier sections (3).

5. Front part of a motor vehicle according to Claim 4, **characterized in that** the air guiding part (16) is constructed as one piece with the rear end collision protection element (17) as a plastic part.

6. Front part of a motor vehicle according to Claim 3, **characterized in that** the air guiding part (16) extends laterally beyond the supports (39, 40) on the longitudinal carrier sections (3).

7. Front part of a motor vehicle according to Claim 1, **characterized in that** the contour (23) of the air guiding part (16) which faces the bumper covering (5) is adapted to the internal contour (23) of the bumper covering (5), the contour (24) of the air guiding part (16) bearing against and being connected to the internal contour (24) of the bumper covering (5).

8. Front part of a motor vehicle according to Claim 7, **characterized in that** the air guiding part (16) is embodied in one piece with the bumper covering (5).

9. Front part of a motor vehicle according to Claim 7, **characterized in that** the air guiding part (16) has a wing-like shape, a number of reinforcement ribs (26) which are oriented in the longitudinal direction of the motor vehicle and are spaced apart from one another in the transverse direction of the motor vehicle being arranged on the upper side of the wing.

10. Front part of a motor vehicle according to Claim 9, **characterized in that** reinforcement ribs (38) are arranged on the underside of the wing, the contour (48) of said reinforcement ribs (38) which lies opposite the bumper covering (5) being matched to the internal contour (49) of the bumper covering (5).

11. Front part of a motor vehicle according to Claim 9, **characterized in that** the wing (16) forms a closed hollow section together with the region (21) of the bumper covering (5) which is positioned in front of it.

12. Front part of a motor vehicle according to Claim 3, **characterized in that**, in addition to support (39, 40) being provided on both sides at the front ends (18) of the longitudinal carrier sections (3), support (41) is provided on a transverse carrier 31, which connects the front longitudinal carrier sections (3).

## Revendications

1. Partie avant de voiture avec une unité d'absorption de chocs, qui comprend une partie de guidage d'air (16) disposée au-dessous du pare-chocs (4), un habillage de pare-chocs (5) et un pare-chocs (4) avant, qui est masqué côté extérieur par l'habillage de pare-chocs, et qui peut être raccordé dans sa zone inférieure à une structure portante de plancher de véhicule, **caractérisée en ce que** la partie de guidage d'air (16) agit conjointement avec l'habillage de pare-chocs (5) dans le cas d'une collision frontale et renforce cet habillage dans une zone placée en avant du pare-chocs (4), la partie de guidage d'air pouvant être soutenue sur la structure portante du plancher (3, 31).

2. Partie avant de voiture selon la revendication 1, **caractérisée en ce que** la partie de guidage d'air (16) disposée au-dessous d'une ouverture d'air de refroidissement (14) introduite dans l'habillage de pare-chocs (5) s'étend sur pratiquement toute la largeur de la voiture.

3. Partie avant de voiture selon la revendication 1, **caractérisée en ce que** le soutien de la partie de guidage d'air (16) sur l'extrémité avant (18) s'effectue par deux parties de longeron (3) appartenant à la structure portante du plancher.

4. Partie avant de voiture selon la revendication 2, **caractérisée en ce que** sur chacune des extrémités avant (18) des parties de longeron (3) est embouti un élément de protection d'impact (17), qui est relié à la partie de guidage d'air (16).

5. Partie avant de voiture selon la revendication 4, **caractérisée en ce que** la partie de guidage d'air (16) est conçue d'une seule pièce avec l'élément de protection d'impact (17) sous la forme d'une partie plastique.

6. Partie avant de voiture selon la revendication 3, **caractérisée en ce que** la partie de guidage d'air (16) s'étend sur le côté au-delà des supports (39, 40) sur les parties de longeron (3).

7. Partie avant de voiture selon la revendication 1, **caractérisée en ce que** le contour (23), tourné vers l'habillage de pare-chocs (5), de la partie de guidage d'air (16) est adapté au contour intérieur (24) de l'habillage de pare-chocs (5), le contour (23) de la partie de guidage d'air (16) s'appuyant sur le contour intérieur (24) de l'habillage de pare-chocs (5) et étant relié.

8. Partie avant de voiture selon la revendication 7, **caractérisée en ce que** la partie de guidage d'air (16) est conçue d'une seule pièce avec l'habillage de pare-chocs (5).

9. Partie avant de voiture selon la revendication 7, **caractérisée en ce que** la partie de guidage d'air (16) présente une forme semblable à une aile, un certain nombre de nervures de renfort (26) orientées dans le sens longitudinal du véhicule et espacées les unes des autres dans le sens transversal du véhicule étant disposé sur le côté supérieur de l'aile.

10. Partie avant de voiture selon la revendication 9, **caractérisée en ce que** sur le côté inférieur de l'aile sont disposées des nervures de renfort (38), dont le contour (48) opposé à l'habillage de pare-chocs (5) est ajusté au contour intérieur (49) de l'habillage de pare-chocs (5).

11. Partie avant de voiture selon la revendication 9, **caractérisée en ce que** l'aile (16) forme conjointement avec la zone (21), située devant, de l'habillage de pare-chocs (5) un profil creux fermé.

12. Partie avant de voiture selon la revendication 3, **caractérisée en ce que**, en supplément du soutien (39, 40) des deux côtés sur les extrémités (18) avant des parties de longeron (3), on a un soutien (41) sur une traverse (31) reliant les parties de longeron (3) avant.
